# EUROPÄISCHE PATENTSCHRIFT

(11) **EP 1 059 723 B1**
(45) Veröffentlichungstag und Bekanntmachung des Hinweises auf die Patenterteilung: **30.08.2006**
(21) Anmeldenummer: 00110602.0
(22) Anmeldetag: 18.05.2000
(51) Int. Cl.: H02K 5/22, H02K 11/04

(54) **Elektromotor mit Anschlusskasten**
Motor with connection box
Moteur avec boitier de connection

(30) Priorität: 10.06.1999 DE 19926542
(43) Veröffentlichungstag der Anmeldung: 13.12.2000
(60) Teilanmeldung: 06004796.6
(73) Patentinhaber: Sew-Eurodrive GmbH & Co. KG, 76646 Bruchsal (DE)
(72) Erfinder: Dietz, Gregor, 76646 Bruchsal (DE); Mack, Franz, 76275 Ettlingen (DE)

(56) Entgegenhaltungen:
- EP-A- 0 351 272
- EP-A- 0 376 530
- EP-A- 0 575 023
- WO-A-98/35424
- DE-A- 19 714 784
- DE-U- 7 416 469
- DE-U- 29 723 145
- GB-A- 2 147 156
- US-A- 5 038 088
- US-A- 5 331 239
- US-A- 5 521 785
- US-A- 5 825 107
- RUMPF K.H.: 'Bauelemente der Elektronik',

## Beschreibung

Die Erfindung betrifft einen Elektromotor.

Bei Elektromotoren sind aus dem Produktkatalog der Firma SEW-EURODRIVE GmbH & Co aus dem Jahre 1999 einerseits Ausführungen mit elektrisch betätigbarer Bremse bekannt und andererseits Ausführungen ohne eine solche Bremse. Es sind ebenfalls Elektromotoren bekannt, die einen Temperatursensor oder Temperaturfühler aufweisen, der wärmeleitend, also mit einem geringen Wärmeübergangswiderstand, mindestens an einen Wicklungsstrang des Stators angekoppelt ist.

Zur Verbindung der Leitungen, die von den Wicklungssträngen des Elektromotors in den Anschlusskasten führen, mit den Netzversorgungsleitungen wird oftmals ein sogenannter Klemmenstein verwendet. Dieser befindet sich im Anschlusskasten des Elektromotors und weist Klemmen auf, die von einem Träger mechanisch gehalten werden. An Klemmen werden die Leitungen des Elektromotors, also Ableitungen der Wicklungssträngen, und Leitungen der Netzversorgung befestigt. Auch bei Elektromotoren mit Bremse oder Temperatursensor werden die Leitungen an einem Klemmenstein oder einer entsprechenden Einheit elektrisch mit externen Leitungen verbunden. Nachteilig ist bei dieser Art der Verbindung, dass ein Austausch eines am Einsatzort sich befindenden Elektromotors sehr zeitaufwendig ist, da das Lösen und Verbinden sehr viel Zeit kostet.

Aus der Schrift 'Praxis der Antriebstechnik', Band 4, der Firma SEW-EURODRIVE GmbH & Co aus dem Jahre 1999 ist bekannt, dass in oder an den Anschlusskasten des Elektromotors elektronische Baugruppen anschließbar sind, die verschiedenen Funktionalitäten aufweisen. Insbesondere sind Schaltungen, wie Gleichrichter, bekannt, die aus einer Wechselspannung eine Gleichspannung zur Versorgung der Bremse erzeugen. Dabei sind Gleichrichter einfachster Bauart bekannt, die nur Dioden-Halbbrücken umfassen. Darüber hinaus sind aber auch Gleichrichter bekannt, die bei einem weiten Bereich von Netzspannung betreibbar sind und eine aufwendigere elektronische Schaltung, insbesondere elektronische Schalter umfassend, enthalten. Weiterhin sind Schaltungen oder als Optionen einsetzbare Baugruppen bekannt, die das Lüften und/oder Einfallen der Bremse beschleunigen. Dazu werden geteilte Bremsspulen eingesetzt und/oder elektronische Ansteuerungen der Bremse mittels elektronischer Schalter. Ferner werden auch Relais oder andere konventionelle Schalter zur Regulierung der Bremsenströme verwendet.

Eine Baureihe von Elektromotoren weist verschieden große Elektromotoren auf, die sich insbesondere in der Baugröße und Leistung, aber auch weiteren Merkmalen, unterscheiden. Innerhalb einer Baugröße weist eine Baureihe von Elektromotoren jedoch verschiedene Varianten auf. Insbesondere werden Elektromotoren in verschiedenen Grundvarianten, wie mit oder ohne Bremse und/oder mit oder ohne Temperaturfühler oder dergleichen, eingesetzt. Weitere Untervarianten werden bei verschiedenen Netzspannungen eingesetzt. Als wichtigstes Unterschiedskriterium sei hier das US-amerikanische und europäische Netzspannungssystem genannt. Außerdem gibt es Varianten, bei welchen die Bremse über einen Gleichrichter aus einem Wechselspannungsnetz versorgt wird. In anderen Fällen wird die Bremse aus einem Gleichspannungsnetz, insbesondere einem in Europa industrieüblichen 24V-Netz versorgt.

Für alle diese Varianten sind verschiedene elektronische Baugruppen zu fertigen. Aus der oben genannten Schrift sind elektronische Baugruppen zum Einbau in den Anschlusskasten bekannt. Für diese Baugruppen steht nur ein begrenzter Raumbereich zur Verfügung. Daher sind aus der genannten Schrift auch andere Baugruppen bekannt, die in Auslassungen des Gehäuses des Anschlusskastens einbaubar sind, wie eine Kabelverschraubung, PG-Verschraubung oder dergleichen.

Der Fertigungsaufwand solcher Baugruppen ist sehr groß und kostspielig. Außerdem ist der Einbau solcher Baugruppen in den Anschlusskasten zeitaufwendig und daher auch kostspielig.

Aus der DE4216036 ist ein Motoranschlusskasten bekannt, der ein schnelles Austauschen eines Elektromotors am Einsatzort ermöglicht. Allerdings ist der Platzbedarf sehr groß, weshalb zusätzliche elektronische Baugruppen in den Anschlusskasten nur schwer einfügbar sind. In einigen Fällen muss daher auf Schaltschrankversionen ausgewichen werden. In diesen Fällen befinden sich die elektronischen Baugruppen im Schaltschrank und müssen mit langen Leitungen verbunden werden. Dies ist mit einem hohen Fertigungs- und Zeitaufwand und hohen Kosten verbunden.

Aus der DE 297 23 145 U1 ist ein Schaltgerät zum Schalten und Überwachen von elektrischen Motoren bekannt, und Schnittstelle vorgesehen, wobei das Schaltgerät auf einem Klemmenkasten 2 oder dem Motorgehäuse befestigt ist und die elektrischen Verbindungen zum Motor sind mittels Steckverbinder 3b, 4b verbunden. Auch die externe Netzzuleitung ist mittels Steckverbinder 12 schnell und einfach verbindbar. Nachteilig ist bei diesem Schaltgerät insbesondere, dass eine Integration in eine Baureihe von Elektromotoren mit variierenden Funktionalitäten bei den Varianten der Baureihe nicht vorgesehen ist.

Aus der EP 0351272 A1 ist ein Elektromotor bekannt, der unterschiedlich bestückte Leiterplatten im Anschlußkasten aufweist.

Aus der EP 0575023 A1 ist eine Ansteuerschaltung für eine Bremse eines Elektromotors bekannt.

Der Erfindung liegt die Aufgabe zugrunde, einen Elektromotor weiterzubilden, der einfach und kostengünstig zu fertigen ist. Insbesondere soll der Elektromotor auch für eine Bauseihe verwendbar sein.

Erfindungsgemäß wird die Aufgabe bei dem Elektromotor nach den in Anspruch 1 angegebenen Merkmalen gelöst.

Dabei führen elektrische Leitungen von Wicklungsstränge des Elektromotors, insbesondere von den Wicklungssträngen des Stators des Motors oder den Wicklungssträngen einer elektromagnetisch betätigbaren Bremse, zu ersten Anschlussvorrichtungen im Anschlusskasten, die mit zweiten Anschlussvorrichtungen elektrisch verbunden sind. Die zweiten Anschlussvorrichtungen sind dabei mit Leitungen lösbar verbindbar, die mindestens Netzversorgungsleitungen umfassen.

Ein wesentliches Merkmal der Erfindung ist, dass bei einer Steckverbindereinheit für einen Anschlusskasten eines Elektromotors ein erstes Steckverbinderteil, insbesondere ein Stecker, zweite Anschlussvorrichtungen umfasst. Von Vorteil ist dabei, dass zur Versorgungsseite hin mittels eines entsprechend passenden Steckverbinderteils eine schnell und einfach lösbare, elektrische und mechanische Verbindung mindestens der Versorgungsleitungen verfügbar ist. Zu Montage-, Reparaturzwecken oder dergleichen kann diese Verbindung in einfacher Weise im Feld gelöst und geschlossen werden. Ein weiteres wesentliches Merkmal der Erfindung ist, dass dieses erste Steckverbinderteil derart aus dem Gehäuse des Anschlusskastens herausragt, dass ein zweites Steckverbinderteil mit dem ersten Steckverbinderteil lösbar verbindbar ist, wobei Versorgungsleitungen, insbesondere auch Leitungen vom Netz her, zum zweiten Steckverbinderteil führen. Von Vorteil ist dabei, dass bei geschlossenem Anschlusskasten die genannte Verbindung des ersten zum zweiten Steckverbinderteils lösbar ist. Ein zeitaufwendiges Öffnen des Anschlusskastens ist daher nicht nötig.

Die ersten Anschlussvorrichtungen sind auf einem Platine montiert und elektrisch mit diesem Platine verbunden, wobei der Platine elektrische Verbindungen, wie Leiterbahnen oder dergleichen, aufweist. Von Vorteil ist dabei, dass die ersten Anschlussvorrichtungen in räumlicher Entfernung von den die zweiten Anschlussvorrichtungen festlegbar sind.

Der Träger ist als Platine ausgebildet. Von Vorteil ist dabei, dass Platinen in Massenproduktion fertigbare kostengünstige Standard-Produkte sind. Ein weiterer Vorteil ist dabei, dass die ersten und/oder zweiten Anschlussvorrichtungen mit dem Träger oder der Platine mittels einer Lötverbindung elektrisch verbunden sind.

Des Weiteren weist das zweite Teil, insbesondere Oberteil, des Anschlusskastens mindestens einen Niederhalter zum Niederhalten der Platine auf. Von Vorteil ist dabei, dass die Platine oder der Träger keinen mechanischen Spannungen oder Verspannungen ausgesetzt wird.

Bei einer weiteren vorteilhaften Ausgestaltung der Erfindung führen die elektrischen Leitungen von Wicklungssträngen des Elektromotors, insbesondere den Wicklungssträngen des Stators des Motors oder den Wicklungssträngen einer elektromagnetisch betätigbaren Bremse, zu ersten Anschlussvorrichtungen im Anschlusskasten und sind mittels einer lösbaren Verbindung, wie Schraubanschluss, Käfigzugfederanschluss, Crimpanschluss oder dergleichen, elektrisch mit elektrisch leitenden Teilen oder Bestandteilen, wie Leiterbahnen auf der Platine verbindbar. Von Vorteil ist dabei, dass einfache, kostengünstige und industrieübliche Verbindungstechniken verwendbar sind.

Bei der Erfindung weist die Platine eine elektronische Schaltung zur Versorgung einer elektromagnetisch betätigbaren Bremse auf. Von Vorteil ist dabei, dass eine entsprechende elektronische Baugruppe nicht zusätzlich in den Anschlusskasten eingebracht und/oder eine solche Baugruppe verdrahtet werden muss. Die elektrischen Verbindungen werden schon bei der Herstellung und Bestückung der Platine in industrieüblicher Weise, wie durch ein Lötbad oder dergleichen, geschaffen. Des weiteren weist die Platine entsprechende elektrische Verbindungen von den ersten Anschlussvorrichtungen zu der elektronischen Schaltung für diejenigen Leitungen auf, die von der Bremse, insbesondere der zugehörigen Bremsspule, zu den ersten Anschlussvorrichtungen führen.

Bei einer weiteren vorteilhaften Ausgestaltung ist ein zusätzliches Gehäuse um die elektronische Schaltung herum ausgeführt. Von Vorteil ist dabei, dass eine elektrischen Isolation und/oder mechanisch stabile, insbesondere rüttelfeste, Verbindung der elektronischen Schaltung zum Anschlusskasten oder anderen Teilen hin ausführbar ist.

Bei der Erfindung weist die Platine eine elektronische Schaltung zum Gleichrichten von Wechselspannung auf. Dabei sind Lösungen einsetzbar, die nur Dioden als Bauelemente verwenden, aber es sind auch Lösungen mit Kondensatoren zur Glättung der pulsierenden Gleichspannung einsetzbar. Von Vorteil ist dabei in allen genannten Fällen, dass die Bremsspule der Bremse mit Gleichspannung versorgbar ist, wobei dabei die Wechselspannung der Netzversorgungsspannung entnehmbar.

Weitere vorteilhafte Ausgestaltungen ergeben sich aus den Unteransprüchen.

Ein wesentliches Merkmal der Erfindung ist, dass sie für eine Baureihe von Elektromotoren geeignet ist. Von Vorteil ist dabei, dass bei der Fertigung die Teilevielfalt reduzierbar ist und Teile bei möglichst vielen Baugrößen und Varianten wiederverwendbar sind.

### Bezugszeichenliste

- 1: erste Anschlussvorrichtungen
- 2: zweite Anschlussvorrichtungen
- 3: elektrische Leitungen von Wicklungssträngen des Elektromotors
- 4: Leitungen, die mindestens Netzversorgungsleitungen umfassen
- 6: erstes Steckverbinderteil
- 7: zweites Steckverbinderteil
- 8: Platine
- 9: elektronische Schaltung
- 10: erstes Teil, insbesondere Unterteil, des Anschlusskastens
- 11: zweites Teil, insbesondere Oberteil, des Anschlusskastens
- 12: Niederhalter
- 13: Auflage zur Befestigung
- 14, 61, 82: Verbindungsleitungen
- 15: Element mit ersten Anschlussvorrichtungen, insbesondere Steckverbinderteil
- 20: Elektromotor
- 31: oberes Steckverbinderteil
- 32: unteres Steckverbinderteil
- 33: Signalelektronik
- 34: Leistungselektronik
- 41: Befestigungselemente, insbesondere Befestigungsschrauben
- 51: Auflage
- 52: elastische Klammer
- 53: verformbarer Bereich
- 54: Bohrung
- 55: Boden des ersten Teils, insbesondere Unterteil
- 61: Steckverbindung
- 81: Dämpfer

Die Erfindung wird nun anhand von einer Abbildung näher erläutert:

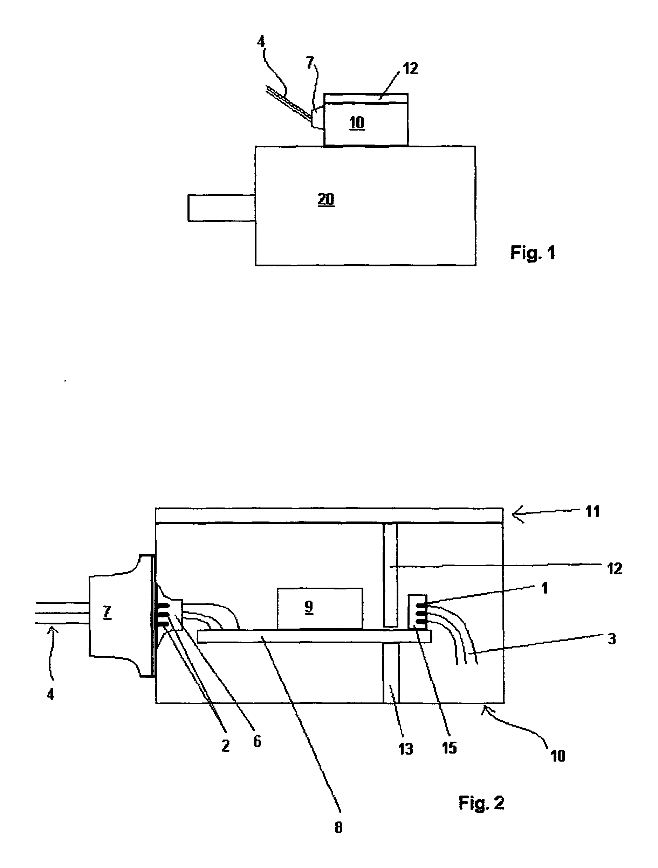

In der Figur 1 ist ein Elektromotor 20 skizziert, der einen Anschlusskasten, umfassend ein erstes Teil 10, insbesondere Unterteil, des Anschlusskastens und ein zweites Teil 11, insbesondere Oberteil, des Anschlusskastens, aufweist. Leitungen 4, die mindestens Netzversorgungsleitungen umfassen, führen zum zweiten Steckverbinderteil 7 und werden mit diesem, auch elektrisch, lösbar verbunden.

In der Figur 2 ist ein erfindungsgemäßes Ausführungsbeispiel gezeigt. Elektrische Leitungen 3 von Wicklungssträngen des Elektromotors, wie Statorspulen und/oder je nach Ausführung Bremsspulen, Temperatursensoren oder dergleichen, führen zu ersten Anschlussvorrichtungen 1 des Elements 15, insbesondere Steckverbinderteil. Das zweite Steckverbinderteil 7 wird von außen auf das im Gehäuse des Anschlusskastens 10 eingebaute und dort befestigte erste Steckverbinderteil 6 zur Herstellung elektrischer Verbindungen aufgesteckt. Dieses erste Steckverbinderteil 6 umfasst zweite Anschlussvorrichtungen 2. Leitungen 4, die mindestens Netzversorgungsleitungen umfassen, führen zum zweiten Steckverbinderteil 7. Die zweiten Anschlussvorrichtungen 2 weisen elektrische Verbindungen zur Platine 8 auf. Dabei werden elektrische Leiter, die mit den zweiten Anschlussvorrichtungen verbunden sind, auf der Platine mittels Lötverbindungen mit elektrisch leitenden Flächen der Platine, also Leiterbahnen, Lauer, Pads oder dergleichen, verbunden. Insbesondere sind diese elektrischen Leiter beispielhaft derart gewählt, dass sie flexibel sind und auftretende Verspannungen zu kompensieren vermögen. Der Niederhalter 12 ist mit dem zweiten Teil 11, insbesondere Oberteil, des Anschlusskastens verbunden und drückt die Platine nieder, ohne Verspannungen zuzulassen. Seine Elastizität ist geeignet ausgelegt. Dabei liegt die Platine auf einer Auflage 13 zur Befestigung auf. Die ersten Anschlussvorrichtungen 1 sind in der Figur 2 derart zusammengefasst, dass sie in einem Element 15 mit ersten Anschlussvorrichtungen, insbesondere Steckverbinderteil, enthalten sind. Beispielhaft ist das Element 15 als Steckverbinderteil ausgeführt. Die elektrischen Leitungen 3 von Wicklungssträngen des Elektromotors werden dabei mit den ersten Anschlussvorrichtungen 1 des Steckverbinders, also beispielhaft des Elementes 15, verbunden und an sie angeschlossen, wobei der Steckverbinder auf die Platine 8 aufgesteckt und angelötet ist. In einem weiteren erfindungsgemäßen Ausführungsbeispiel ist das Element 15 als auf die Platine 8 aufsteckbare und verlötbare Klemmenleiste ausgeführt. Dabei werden die elektrischen Leitungen 3 von Wicklungssträngen des Elektromotors in der Klemmenleiste befestigt, die wiederum elektrisch verbindbar mit Leiterbahnen der Platine 8 ist.

Die elektronische Schaltung 9 ist innerhalb der Baureihe jeweils verschieden ausgeführt. Die wichtigste Variable ist dabei die Baugröße oder Leistungsklasse. Falls es jedoch die Auslegungsdaten, wie Nenndaten oder dergleichen, zulassen, werden nach Möglichkeit innerhalb der Baureihe, möglichst auch über Baugrößen hinweg, die gleichen elektronischen Schaltungen 9, Platinen 8, Steckverbinder, Anschlussvorrichtungen oder dergleichen verwendet, um die Vielfalt der Teile und damit auch der Kosten zu reduzieren.

Jedoch kann die Ausführungsform auch innerhalb einer einzigen Baugröße variieren. Bei einem Elektromotor ohne Bremse und Temperaturfühler ist die elektronische Schaltung 9 nicht vorhanden, also werden auf der Platine 8 nur Verbindungen durchgeschleift, um die ersten Anschlussvorrichtungen 1 mit den zweiten Anschlussvorrichtungen 2 zu verbinden.

Bei anderen Vertretern innerhalb der Baureihe variiert die Ausführungsform weiter. Insbesondere bei einem Elektromotor mit Bremse ist die elektronische Schaltung verschieden ausführbar. Eine Ausführungsform weist einen Gleichrichter auf zur Versorgung der Bremse aus Netzspannung.

Dabei wird diese Wechselspannung in Gleichspannung verwandelt. Die Gleichrichter sind auch innerhalb einer Baugröße verschieden. Insbesondere werden für verschieden hohe Spannungen oder Spannungsbereiche verschiedene Ausführungen gefertigt. Die Gleichrichter enthalten dabei nicht nur Dioden als Bauelemente sondern werden teilweise auch aufwendiger ausgeführt zur Erreichung eines möglichst weiten Bereiches von zulässigen Netz-Versorgungsspannungen für die Bremsspule. Auf diese Art und Weise müssen innerhalb einer Baugröße nicht viele verschiedenen Bremsspulen verwendet werden, sondern es reichen nur wenige, beispielsweise zwei, aus.

Des weiteren sind innerhalb einer Baugröße verschiedene elektronische Schaltungen einsetzbar, die weitere Optionen der Bremsansteuerung ermöglichen. Insbesondere sind derartige Optionen für ein schnelles Lüften und Einfallen der Bremse einsetzbar. Dazu werden jeweilige elektronische Schaltungen 9 mit entsprechender Funktionalität auf der Platine 8 eingesetzt.

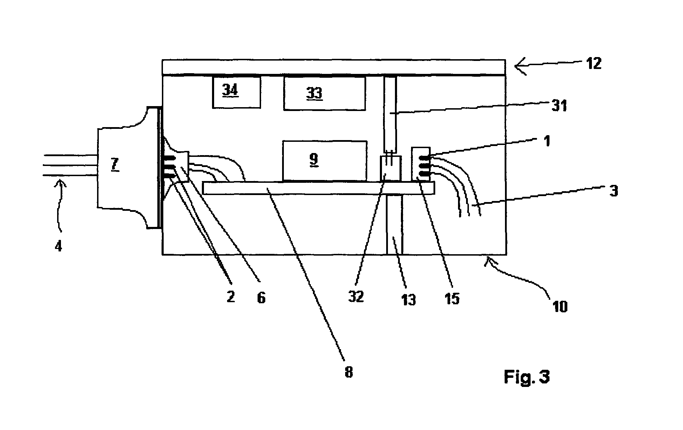

Durch geänderte Bestückung der Platine sind ausgehend von dem erfindungsgemäßen Elektromotor folgende anhand der Figur 3 erläuterte Varianten einer Baureihe schnell und einfach herstellbar, die nicht von der Erfindung umfaßt sind:

Beispielsweise wird gemäß Figur 3 in das zweite Teil 11, insbesondere Oberteil, Signalelektronik 33 und Leistungselektronik 34 eingefügt. Diese wird über einen weiteren Steckverbinder, der ein oberes Steckverbinderteil 31 und ein unteres Steckverbinderteil 32 umfasst, mit der Platine 8 verbunden. Dadurch ist ein einfaches Abmontieren des zweiten Teils 11, insbesondere Oberteil, des Anschlusskastens in einfacher Weise schnell möglich. Der Steckverbinder (31, 32) stellt, mit Ausnahme der Erdungsverbindung die einzige elektrische Verbindung vom zweiten Teil 11, insbesondere Oberteil, mit dem ersten Teil 10, insbesondere Unterteil, des Anschlusskasten dar.

Beispielsweise wird eine Wärmesperre zur wärmetechnischen Abtrennung des zweiten Teils 11, insbesondere Oberteil, vom ersten Teil 10, insbesondere Unterteil, vorgesehen. Somit kann die Wärme der Leistungselektronik über das zweite Teil 10, insbesondere Oberteil, an die Umgebung abgeführt werden. Die Steuerelektronik der Signalelektronik 33 weist bei verschiedenen erfindungsgemäßen Ausführungsformen verschiedene Grade an Komplexizität auf. Insbesondere ist eine einfache Motorschaltstufe, mittels welcher der Elektromotor ein- und ausschaltbar ist, realisierbar. Dieses Schalten kann am Sternpunkt bei einem sternförmig verschalteten Motor erfolgen, insbesondere mittels eines elektronischen Schalters. Das Schalten kann aber auch mittels Thyristoren erfolgen, die in einer Dreiphasen-Gleichrichter-Schaltung teilweise Dioden ersetzen, wobei die Dreiphasen-Gleichrichter-Schaltung wechselstromseitig mit den Phasen des Motors verbunden ist, gleichstromseitig kurzgeschlossen ist und somit der Sternpunkt des Motors je nach Zustand der Thyristoren kurzschließbar ist. Andererseits ist auch eine komplexere Elektronik einsetzbar. Insbesondere ein Sanftanlaufgerät. Dieses kann durch phasenanschnittgesteuerte Thyristoren oder dergleichen in der beschriebenen Schaltungsart erfolgen.

Beispielsweise wird statt eines Steckverbinders zur Verbindung des ersten Teils 10, insbesondere Unterteil, und des zweiten Teils 11, insbesondere Oberteil, des Anschlusskastens zumindest eine flexible Leitung ausgestaltet. Zu deren Anschluss weist die erfindungsgemäße Ausführungsform zumindest einen Steckverbinder am Ende der flexiblen Leitung am zweiten Teil 11 und/oder auf der Platine 8 auf.

Darüber hinaus ist auch die Funktionalität eines Umrichters durch die elektronische Schaltung, umfassend die Signalelektronik 33 und die Leistungselektronik 34, ausbildbar.

In der Figur 3 ist eine weitere nicht erfindungsgemäße Ausführungsform gezeigt. Dabei ist die einzige elektrische Verbindung mit Ausnahme der Masseverbindung zwischen zweitem Teil 11, insbesondere Oberteil, und erstem Teil 10, insbesondere Unterteil, des Anschlusskastens ein Steckverbinder, der ein oberes Steckverbinderteil 31 und ein unteres Steckverbinderteil 32 umfasst. Das zweite Teil 11, insbesondere Oberteil, trägt Signalelektronik 33 und Leistungselektronik 34. Die Signalelektronik 33 steuert auch die Leistungselektronik 34 an und ist in einem weiteren erfindungsgemäßen Ausführungsbeispiel mit einer Wärmesperre zur Leistungselektronik 34 und/oder zum Elektromotor oder zum ersten Teil 10, insbesondere Unterteil, des Anschlusskastens versehen.

Die Leistungselektronik 34 ist wärmeleitend mit dem zweiten Teil 11, insbesondere Oberteil, verbunden und gibt die Wärme über dieses an die Umgebung ab. Bei einem weiteren erfindungsgemäßen Ausführungsbeispiel ist die Leistungselektronik 34 mit einer Wärmesperre zur Signalelektronik 33 und/oder zum Elektromotor oder erstes Teil, insbesondere Unterteil, des Anschlusskastens versehen.

Bei den genannten Wärmesperren kann es sich um wärmeisolierende Bauteile, also Bauteile mit einem hohen Wärmeübergangswiderstand, handeln oder auch nur um beispielsweise einfache Kunststoffwände, die Raumluftbereiche trennen, wobei Raumluftbereiche mittels einer durch einen Lüfter bewirkten Luftströmung im Wesentlichen auf einem Temperaturniveau gehalten werden.

Die Funktionalität der aus Signalelektronik 33 und Leistungselektronik 34 gleicht einer Motorschaltstufe. Bei einem weiteren nicht erfindungsgemäßen Ausführungsbeispiel gleicht sie einer Motorschaltstufe mit Sanftanlaufschaltung, bei einem wiederum weiteren einer Motorschaltstufe mit Umrichter-Funktionalität. Bei einem weiteren nicht erfindungsgemäßen Ausführungsbeispiel weist sie Anschlussvorrichtungen für Feldbus auf und kann somit von einer zentralen Steuerung angesteuert werden und Daten austauschen, wie beispielsweise Fehlermeldungen.

Alternativ sind elektronische Bauteile innerhalb eines zusätzlichen speziellen Schutzgehäuses ähnlich wie in Figur 3 angeordnet. Zur Erhöhung der Rüttelfestigkeit wird bei einigen erfindungsgemäßen Ausführungsformen das Schutzgehäuse mit Vergussmasse ausgegossen.

In anderen erfindungsgemäßen Ausführungsformen wird der Anschlusskasten insgesamt oder zumindest teilweise dessen erstes Teil 10, insbesondere Unterteil, mit Vergussmasse ausgegossen zur Erhöhung der Rüttelfestigkeit.

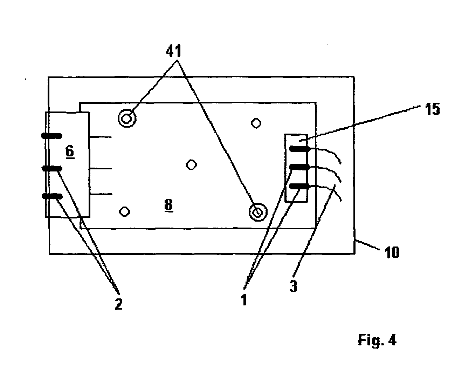

In der Figur 4 ist bei einer erfindungsgemäßen Ausführungsform eine beispielhafte Befestigungsmethode gezeigt. Die Platine 8, auf der das erste Steckverbinderteil 6, das zweite Anschlussvorrichtungen umfasst, und das Element 15, insbesondere Steckverbinderteil, mit ersten Anschlussvorrichtungen 1 montiert und mittels Lötverbindungen sind, ist mit dem ersten Teil, insbesondere Unterteil, des Anschlusskastens 10 mittels Befestigungselemente, insbesondere Befestigungsschrauben, lösbar verbunden.

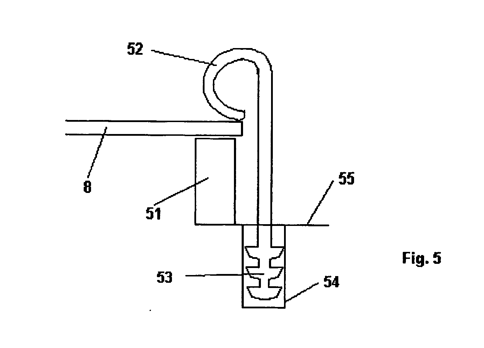

In der Figur 5 ist beispielhaft für eine erfindungsgemäße Ausführungsform ein weitere Art der Befestigungsmethode gezeigt. Dabei wird in eine Bohrung 54 des Bodens 55 des ersten Teils, insbesondere Unterteil, ein Element aus Kunststoff und/oder Metall gesteckt, das einen verformbarer Bereich 53 aufweist, der beim Einstecken in die Bohrung verquetscht wird und dadurch fixiert wird. In der Figur 5 ist ein zu großer Durchmesser symbolhaft verwendet und der verformbare Bereich 53 unverquetscht eingezeichnet. Zusätzlich weist das genannte Element eine elastische Klammer 52 auf. Beim Einstecken der Platine 8 nimmt die elastische Kraft der elastischen Klammer 52 von Null auf einen Maximalwert zu und kehrt bei weiterem Einstecken mit weiter zunehmendem Einsteckweg die Kraftrichtung um, der Kraftverlauf hat also einen Nulldurchgang. Das Einstecken der Platine 8 ist beendet, wenn die Platine 8 die Auflage 51 berührt.

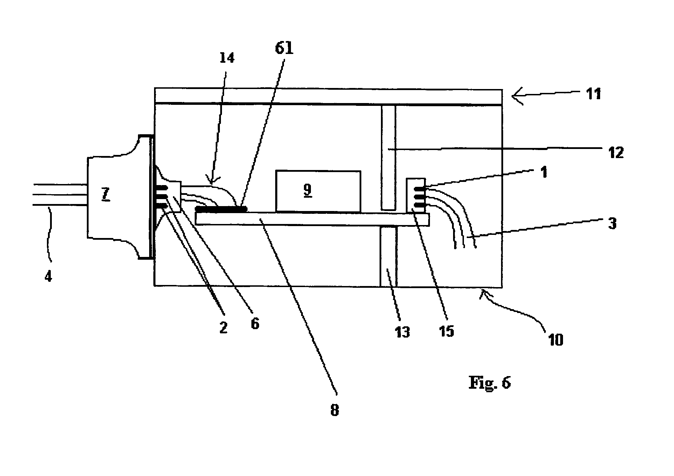

In der Figur 6 ist ein anderes erfindungsgemäßes Ausführungsbeispiel gezeigt, bei dem das erste Steckverbinderteil 6 über Verbindungsleitungen 14 und eine Steckverbindung 61 elektrisch mit der Platine 8 verbindbar ist. Bei einem solchen Ausführungsbeispiel sind die Verbindungsleitungen 14 flexibel ausgeführt. Somit ist das Steckverbinderteil 6 mechanisch im Wesentlichen entkoppelt von der Platine 8. Insbesondere statische Kräfte oder langwellige und/oder niedrigfrequente Schwingungen können nicht übertragen werden. Die Quelle der Schwingungen oder statischen Kräfte

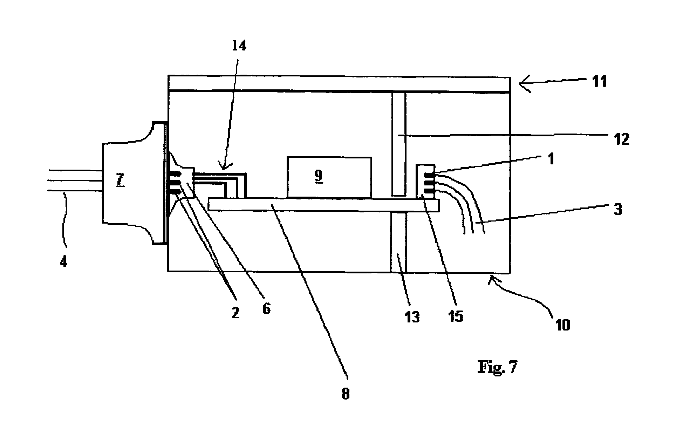

In der Figur 7 ist ein ähnliches erfindungsgemäßes Ausführungsbeispiel gezeigt, bei dem die Verbindungsleitungen 14 aber als Stanzteile, die in sich verdreht sind, ausgeführt. Durch diese Verdrehung werden mechanische, langwellige und/oder niedrigfrequente Schwingungen und besonders statische Kräfte nicht oder nur derart geringfügig durchgeleitet, dass die keine zerstörende Wirkung für die Platine 8 mit Bauteilen oder für Lötverbindungen aufweisen.

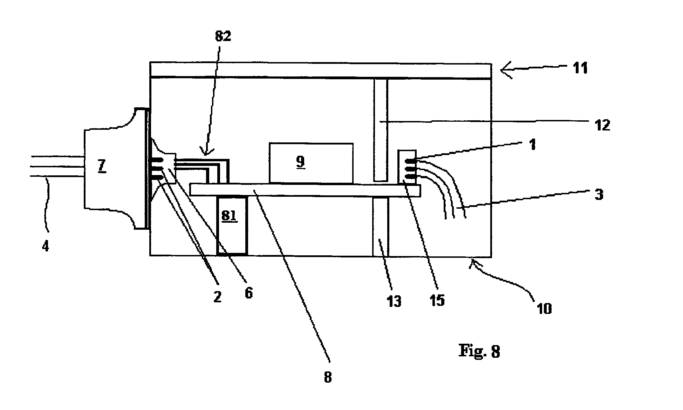

In der Figur 8 ist ein ähnliches erfindungsgemäßes Ausführungsbeispiel gezeigt, bei dem die Verbindungsleitungen 82 starr ausgeführt sind und die Platine 8 auf Dämpfern 81 aufliegt. Dabei können zwar Schwingungen vom Steckverbinderteil 6 über die Verbindungsleitungen 14 auf die Platine 8 übertragen werden, die Platine 8 ist jedoch mittels der Dämpfer 81 derart entkoppelt, dass keine Zerstörungen von Lötverbindungen oder Bauteilen auftreten.

Durch geänderte Bestückung der Platine sind ausgehend von dem erfindungsgemäßen Elektromotor folgende Varianten einer Baureihe schnell und einfach herstellbar, die nicht von der Erfindung umfaßt sind:

Wenn die Platine beispielsweise keine elektronischen Bauteile, insbesondere keine. Widerstände, keine Kondensatoren, keine Halbleiterbauelemente oder dergleichen, aufweist ist. Von Vorteil dabei, dass die Platine nur der Verbindung der ersten und zweiten Anschlussvorrichtungen dient und ihre elektrisch leitenden Teile, wie Leiterbahnen oder dergleichen, mit diesen jeweils in einfacher, kostengünstiger Art und Weise verbindbar ist.

Darüber hinaus kann die Platine elektronische Bauteile, insbesondere Widerstände, Kondensatoren, Halbleiterbauelemente oder dergleichen, aufweisen. Von Vorteil ist dabei, dass bei einer vorteilhaften Ausgestaltung durch Bestückung verschiedene Betriebsarten oder Funktionen erzeugbar sind. Insbesondere sind durch verschiedene Bestückung verschiedene Spannungssysteme verwendbar. Auch ist bei verschiedenen Baugrößen, insbesondere auch wegen verschieden großer Bremsspulen, eine verschiedene Bestückung ausführbar.

Die Platine kann zum Herstellung anderer Varianten der Baureihe bestückt werden mit einem weiteren Steckverbinder innerhalb des Anschlusskastens, wobei das zweite Teil, insbesondere Oberteil, des Anschlusskastens einen entsprechenden Steckverbinder und eine elektronische Schaltung aufweist. Von Vorteil ist dabei, dass mittels des weiteren Steckverbinders elektrische Verbindungen zum zweiten Teil, insbesondere Oberteil, herstellbar sind und daher eine elektronische Baugruppe oder auch nur passive Einrichtungen, wie Anschlussvorrichtungen, im zweiten Teil, insbesondere Oberteil, elektrisch verbindbar sind mit der Platine, die sich im erstes Teil, insbesondere Unterteil, befindet.

In diesem Fall weist das zweite Teil, insbesondere Oberteil, des Anschlusskastens Leistungselektronik auf und die Leistungselektronik ist mit dem zweiten Teil, insbesondere Oberteil, des Anschlusskastens wärmeleitend verbunden. Von Vorteil ist dabei, dass die Wärme der Leistungselektronik über das zweite Teil, insbesondere Oberteil, abführbar ist und eine Wärmesperre zwischen dem Wärmeniveau des Motors und dem zweites Teil, insbesondere Oberteil, einsetzbar ist.

Insbesondere ist die Leistungselektronik derart gestaltet und verdrahtet, dass sie den Sternpunkt des Elektromotors öffnen und schließen kann. Von Vorteil ist dabei, dass eine Motorschaltstufe realisierbar ist, die den Motor aus- und anschalten kann. In weiteren Ausgestaltungen sind auch Schaltstufen ausführbar, bei denen die Leistungselektronik den effektiven Spannungswert der am Motor anliegenden Spannung beeinflusst, wie mittels einer Phasenanschnittsteuerung bei Thyristoren oder dergleichen.

Alternativ weist das zweite Teil, insbesondere Oberteil, oder die Platine weitere Signalelektronik auf. Von Vorteil ist dabei, dass die Leistungselektronik in komplexer Weise ansteuerbar ist und daher umfangreiche Ansteuerungslogik und/oder Steuer- und Regelungsverfahren anwendbar sind. Insbesondere bei einer Ausstattung der Signalelektronik mit Sensoren, wie Spannungs- und/oder Stromsensoren oder dergleichen, sind solche Verfahren in guter Qualität ausführbar. Bei einer weiteren vorteilhaften Ausgestaltung ist die Signalelektronik und die Leistungselektronik des zweiten Teil, insbesondere Oberteil, auch funktional einem Umrichter entsprechend ausführbar.

Beispielsweise ist die weitere Signalelektronik und die Leistungselektronik derart gestaltet, dass sie funktional einer Motorschaltstufe mit Stern-Dreieck-Umschaltung, Sanftanlauf oder Motorüberlastabschaltung oder dergleichen gleichwertig sind oder funktional einem Umrichter entsprechen. Von Vorteil ist dabei, dass komplexe Funktionen im Anschlusskasten integrierbar ist. Dabei ist sogar eine Positioniersteuerung integrierbar.

Beispielsweise ist die weitere Signalelektronik elektrisch an ein Informationsübermittlungssystem, wie Feldbus oder dergleichen, anschließbar. Von Vorteil ist dabei, dass ein Austausch von Daten, wie Ansteuerung, Fehlerrückmeldung oder dergleichen, ermöglicht wird. Insbesondere ist ein Elektromotor von einer zentralen Steuerung ein- oder ausschaltbar.

Beispielweise weist die Platine Schalter, Jumper oder dergleichen auf. Von Vorteil ist dabei, dass ein Umschalten der Betriebsarten ermöglicht wird. Besonders wichtig ist dabei ein Umschalten der Betriebsart eines langsamen Bremseneinfalls auf die Betriebsart eines schnellen Bremseneinfalls. Dafür sind verschiedenen Techniken anwendbar. Insbesondere kann die Bremse abgeschaltet werden, indem ein Wechselstromkreis oder ein Gleichstromkreis aufgetrennt wird, wobei die Geschwindigkeit des Bremseneinfalls davon abhängig ist. Analoge Vorteile gelten in weiteren vorteilhaften Ausgestaltungen für das Lüften der Bremse.

## Patentansprüche

1. Elektromotor mit Anschlusskasten, der eine Steckverbindereinheit umfasst,
wobei jede Steckverbindereinheit eine Platine 8, erste Anschlussvorrichtungen 1 und ein erstes, zweite Anschlussvorrichtungen 2 umfassendes Steckverbinderteil 6 umfasst, die mit den ersten Anschlussvorrichtungen 1 elektrisch verbunden sind und die mit Leitungen 4 lösbar verbindbar sind, die mindestens Netzversorgungsleitungen umfassen,
und wobei elektrische Leitungen 3 von Wicklungssträngen des Elektromotors zu den ersten Anschlussvorrichtungen 1 im Anschlusskasten (10, 11) führen und dort mittels einer lösbaren Verbindung, elektrisch mit elektrisch leitenden Teilen der jeweiligen Platine 8 verbindbar sind,
und wobei dieses erste Steckverbinderteil 6 derart aus dem Gehäuse des Anschlusskastens (10, 11) herausragt, dass ein zweites, mit Netzversorgungsleitungen verbundenes Steckverbinderteil 7 mit dem ersten Steckverbinderteil 6 lösbar verbindbar ist,
und wobei die ersten und zweiten Anschlussvorrichtungen (1,2) elektrisch mit elektrisch leitenden Teilen einer Platine 8, wie elektrische Verbindungen, Leiterbahnen, Layer, Pads, mittels Lötverbindung verbunden sind,
wobei der Anschlusskasten (10, 11) mindestens aus zwei Teilen, also mindestens aus einem ersten Teil 10, insbesondere Unterteil, und einem zweiten Teil 11, insbesondere Oberteil, aufgebaut ist,
und wobei
(b) die Platine 8 eine elektronische Schaltung 9 zur Versorgung einer elektromagnetisch betätigbaren Bremse aufweist, wobei die elektronische Schaltung auf der Platine 8 derart gestaltet ist, dass sie zum Gleichrichten von Wechselspannung verwendbar ist,
wobei die ersten Anschlussvorrichtungen 1, die zweiten Anschlussvorrichtungen 2 und die Platine 8 mit dem ersten Teil 10, insbesondere Unterteil, des Anschlusskastens mechanisch und elektrisch verbunden sind,
wobei das zweite Teil 11, insbesondere Oberteil, des Anschlusskastens (10,11) mindestens einen Niederhalter 12 zum Niederhalten der Platine aufweist.

2. Elektromotor nach Anspruch 1,
**dadurch gekennzeichnet, dass**
zwischen dem ersten Teil 10, insbesondere Unterteil, und dem zweiten Teil 11, insbesondere Oberteil, eine Wärmesperre vorhanden ist.

3. Elektromotor nach mindestens einem der vorangegangenen Ansprüche,
**dadurch gekennzeichnet, dass**
der Anschlusskasten (10,11) mindestens teilweise mit Vergussmasse zur Erhöhung der Rüttelfestigkeit ausgegossen ist.

4. Elektromotor nach mindestens einem der vorangegangenen Ansprüche,
**dadurch gekennzeichnet, dass**
das zweite Teil 11, insbesondere Oberteil, mit mindestens einem Kühlkörper verbunden ist.

5. Elektromotor nach mindestens einem der vorangegangenen Ansprüche,
**dadurch gekennzeichnet, dass**
mindestens ein Steckverbinderteil (6,7) derart gestaltet ist, dass eine Stern-/Dreieck-Umschaltung für den Elektromotor in oder an diesem Steckverbinderteil durchführbar ist.

6. Elektromotor nach mindestens einem der vorangegangenen Ansprüche,
**dadurch gekennzeichnet, dass**
die Platine 8 mit Befestigungselementen, wie Schrauben, Klammern oder dergleichen, lösbar am ersten Teil 10, insbesondere Unterteil, des Anschlusskastens (10,11) befestigt wird.

7. Elektromotor nach mindestens einem der vorangegangenen Ansprüche,
**dadurch gekennzeichnet, dass**
die Platine 8 mit Befestigungselementen lösbar am ersten Teil 10, insbesondere Unterteil, des Anschlusskastens (10,11) befestigt wird, wobei der Kraftverlauf beim Einstecken der Platine 8 mit zunehmender Strecke des Einsteckens einen Nulldurchgang aufweist und nach Beendigung des Einsteckens die Befestigungselemente eine konstante Kraft auf die Platine ausüben, insbesondere Null Newton oder einen anderen Wert.

## Claims

1. An electric motor with a connecting box which comprises a connector unit,
wherein each connector unit comprises a printed-circuit board 8, first connector devices 1 and a first connector part 6 comprising second connector devices 2, which are electrically connected to the first connector devices 1 and which are connectable in a releasable manner to lines 4 which comprise at least mains supply lines,
and wherein electrical lines 3 lead from winding strands of the electric motor to the first connector devices 1 in the connecting box (10, 11) and are electrically connectable there to electrically conducting parts of the respective printed-circuit board 8 by means of a releasable connexion,
and wherein the said first connector part 6 projects out of the housing of the connecting box (10, 11) in such a way that a second connector part 7 connected to mains supply lines is connectable in a releasable manner to the first connector part 6,
and wherein the first and second connector devices (1, 2) are electrically connected to electrically conducting parts of a printed-circuit board 8, such as electrical connexions, conductor tracks, layers, pads, by means of a soldered joint,
wherein the connecting box (10, 11) is formed from at least two parts, *i.e.* at least from a first part 10, in particular the lower part, and a second part 11, in particular the upper part,
and wherein
(b) the printed-circuit board 8 has an electronic circuit 9 for supplying an electromagnetically actuable brake, the electronic circuit being arranged on the printed-circuit board 8 in such a way that it is usable for rectifying alternating-current voltage,
wherein the first connector devices 1, the second connector devices 2 and the printed-circuit board 8 are connected mechanically and electrically to the first part 10, in particular the lower part, of the connecting box,
wherein the second part 11, in particular the upper part, of the connecting box (10, 11) has at least one holding-down means 12 for holding down the printed-circuit board 8.

2. An electric motor according to Claim 1, **characterized in that** a thermal barrier is present between the first part 10, in particular the lower part, and the second part 11, in particular the upper part.

3. An electric motor according to at least one of the preceding Claims, **characterized in that** the connecting box (10, 11) is cast at least in part with casting compound in order to increase the vibration resistance.

4. An electric motor according to at least one of the preceding Claims, **characterized in that** the second part 11, in particular the upper part, is connected to at least one cooling body.

5. An electric motor according to at least one of the preceding Claims, **characterized in that** at least one connector part (6, 7) is arranged in such a way that it is possible to carry out a star / mesh switching for the electric motor in or on the said connector part.

6. An electric motor according to at least one of the preceding Claims, **characterized in that** the printed-circuit board 8 is fastened in a releasable manner to the first part 10, in particular the lower part, of the connecting box (10, 11) by fastening elements, such as screws, clips or the like.

7. An electric motor according to at least one of the preceding Claims, **characterized in that** the printed-circuit board 8 is fastened in a releasable manner to the first part 10, in particular the lower part, of the connecting box (10, 11) by fastening elements, the force pattern during the insertion of the printed-circuit board 8 having a zero crossing as the path of the insertion increases, and the fastening elements exerting a constant force upon the printed-circuit board, in particular zero N or another figure, after the end of the insertion.

## Revendications

1. Moteur électrique avec une boîte de raccordement qui comprend une unité de connecteur,
dans lequel chaque unité de connecteur comprend une platine 8, des premiers dispositifs de raccordement 1 et une première partie de connecteur 6 comprenant des deuxièmes dispositifs de raccordement 2 qui sont connectés électriquement avec les premiers dispositifs de raccordement 1 et qui peuvent être connectés de manière détachable avec des lignes 4 qui comprennent au moins des lignes d'alimentation secteur,
et dans lequel des lignes électriques 3 vont de phases d'enroulement du moteur électrique aux premiers dispositifs de raccordement 1 dans la boîte de raccordement (10, 11) et peuvent y être connectées avec des parties électroconductrices de la platine 8 au moyen d'une connexion détachable,
et dans lequel cette première partie de connecteur 6 dépasse du boîtier de la boîte de raccordement (10, 11) de telle manière qu'une deuxième partie de connecteur 7 reliée à des lignes d'alimentation secteur puisse être connectée de manière détachable à la première partie de connecteur 6,
et dans lequel les premiers et deuxièmes dispositifs de raccordement (1, 2) sont connectés électriquement avec des parties électroconductrices de la platine 8, telles que connexions, pistes conductrices, couches, pastilles, au moyen d'une connexion soudée,
dans lequel la boîte de raccordement (10, 11) est constituée d'au moins deux parties, à savoir au moins une première partie 10, en particulier partie inférieure, et d'une deuxième partie 11, en particulier partie supérieure,
et dans lequel
(b) la platine 8 présente un circuit électronique 9 pour l'alimentation d'un frein à commande électromagnétique, le circuit électronique étant conçu sur la platine 8 de manière à pouvoir être utilisé pour le redressement d'une tension alternative,
dans lequel les premiers dispositifs de raccordement 1, les deuxièmes dispositifs de raccordement 2 et la platine 8 sont reliés mécaniquement et électriquement à la première partie 10, en particulier partie inférieure, de la boîte de raccordement,
dans lequel la deuxième partie 11, en particulier partie supérieure, de la boîte de raccordement (10, 11) présente au moins un dispositif de retenue 12 pour retenir la platine 8.

2. Moteur électrique selon la revendication 1,
**caractérisé par le fait**
**qu'**il existe une barrière thermique entre la première partie 10, en particulier partie inférieure, et la deuxième partie 11, en particulier partie supérieure.

3. Moteur électrique selon au moins l'une des revendications précédentes,
**caractérisé par le fait**
**que** la boîte de raccordement (10, 11) est scellée au moins partiellement avec de la masse de scellement pour augmenter la résistance aux secousses.

4. Moteur électrique selon au moins l'une des revendications précédentes,
**caractérisé par le fait**
**que** la deuxième partie 11, en particulier partie supérieure, est reliée à au moins un radiateur.

5. Moteur électrique selon au moins l'une des revendications précédentes,
**caractérisé par le fait**
**qu'**au moins une partie de connecteur (6, 7) est conçue de manière à permettre de réaliser une commutation étoile-triangle pour le moteur électrique dans ou sur cette partie de connecteur.

6. Moteur électrique selon au moins l'une des revendications précédentes,
**caractérisé par le fait**
**que** la platine 8 est fixée de manière détachable sur la première partie 10, en particulier partie inférieure, de la boîte de raccordement avec des éléments de fixation tels que vis, agrafes ou analogues.

7. Moteur électrique selon au moins l'une des revendications précédentes,
**caractérisé par le fait**
**que** la platine 8 est fixée de manière détachable sur la première partie 10, en particulier partie inférieure, de la boîte de raccordement avec des éléments de fixation, le tracé de la force lors de l'insertion de la platine 8 présentant un passage par zéro lorsque le trajet d'insertion augmente et les éléments de fixation exerçant une force constante sur la platine, en particulier zéro newton ou une autre valeur, à la fin de l'insertion.
